# EUROPEAN PATENT APPLICATION

(11) **EP 1 632 836 A2**
(43) Date of publication of application: **08.03.2006**
(21) Application number: 05291840.6
(22) Date of filing: 07.09.2005
(51) Int. Cl.: G06F 1/00

(54) **Information processing apparatus and method, program, and recording medium**

(30) Priority: 07.09.2004 JP 2004259857
(71) Applicant: SONY CORPORATION, Tokyo (JP)
(72) Inventor: Nakamura, Mitsuhiro, Shinagawa-ku, Tokyo (JP)
(74) Representative: Thévenet, Jean-Bruno

(57) **Abstract**

The present invention provides an information processing apparatus for communicating with another information processing apparatus by wire or wireless, the apparatus including: a random number generating section (411); a first authentication data generating section (418) generating first authentication data regarding the authentication of the other information processing apparatus on the basis of the generated random number; a authentication data transmitting section (417) transmitting the first authentication data to the other information processing apparatus; an authentication data receiving section (416) receiving second authentication data regarding the authentication of the other information processing apparatus; a decrypting section (413) decrypting the second authentication data using at least one decryption method corresponding to at least one encryption method; and an authenticating section (414) verifying, on the basis of the decrypted second authentication data and the generated random number, whether the other information processing apparatus is valid.

## Description

### BACKGROUND OF THE INVENTION

### 1. Field of the Invention

The present invention relates to an information processing apparatus and method, a program for the apparatus, and a recording medium storing the program, and more particularly, to an information processing apparatus and method for enabling communication devices to authenticate each other with reliability, a program for the apparatus, and a recording medium storing the program.

### 2. Description of the Related, Art

In executing various transactions using an IC card, in order to provide security, the IC card and a reader/writer generally authenticate each other (mutual authentication) prior to the execution of the transactions (refer to, e.g., Japanese Unexamined Patent Application Publication No. 10-20780).

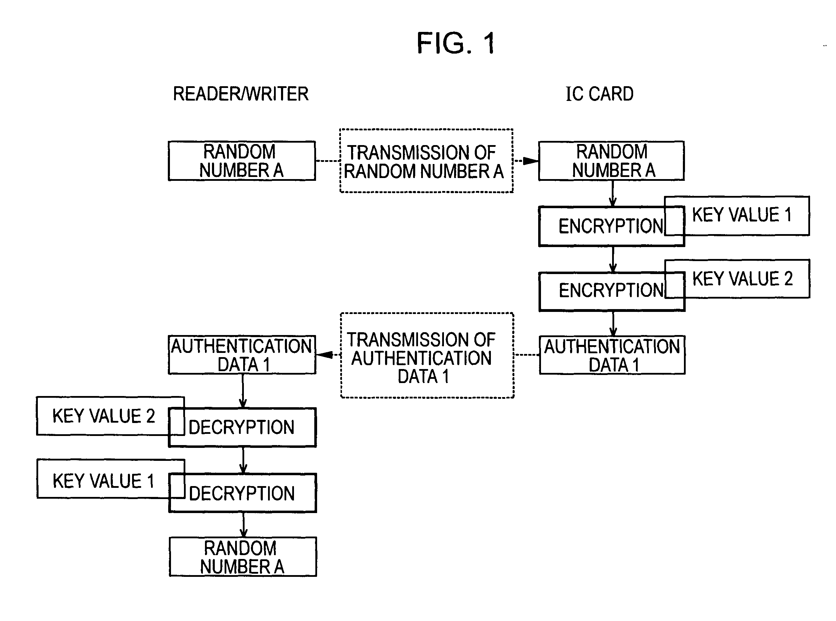

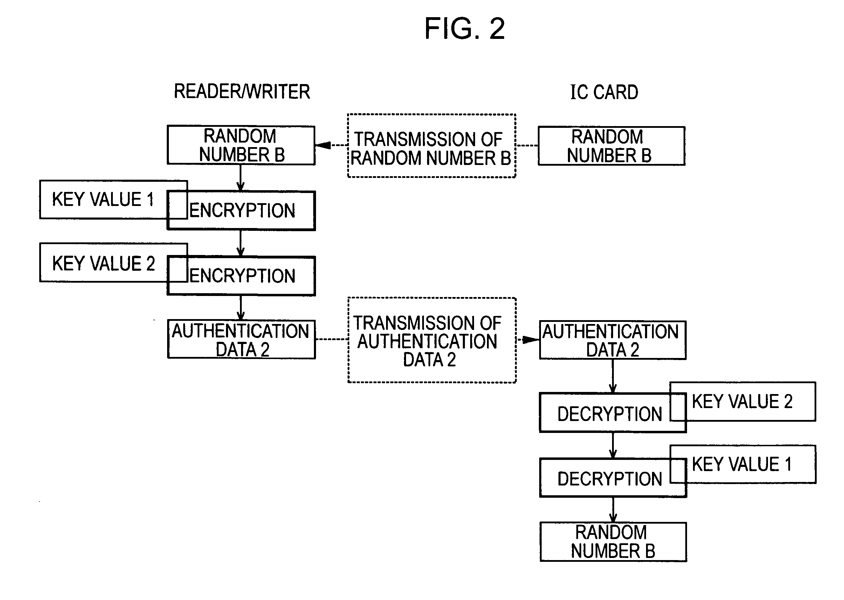

Figs. 1 and 2 show conventional mutual authentication. To authenticate an IC card through a reader/writer, as shown in Fig. 1, the reader/writer generates a random number A and transmits the random number A to the IC card. The IC card encrypts the random number A using a key 1 according to a predetermined encryption algorithm. The IC card further encrypts the resultant data using a key 2 according to the same encryption algorithm to generate authentication data 1 and transmits the authentication data 1 to the reader/writer. The keys 1 and 2 are shared between the reader/writer and the IC card. The same encryption algorithm is installed on each of the reader/writer and the IC card.

Subsequently, the reader/writer receives the authentication data 1, decrypts the data using the key 2 according to the above-mentioned encryption algorithm, and further decrypts the resultant data using the key 1 according to the same encryption algorithm. When the random number A is obtained as a result of decryption, the reader/writer authenticates the IC card (as a valid IC card).

On the other hand, to authenticate the reader/writer through the IC card, as shown in Fig. 2, the IC card generates a random number B and transmits the random number B to the reader/writer. The reader/writer encrypts the random number B using the key 1 according to the predetermined encryption algorithm. Further, the reader/writer encrypts the resultant data using the key 2 according to the same encryption algorithm to generate authentication data 2 and transmits the authentication data 2 to the IC card.

The IC card receives the authentication data 2 and decrypts the received data using the key 2 according to the above-mentioned encryption algorithm, further decrypts the resultant data using the key 1 according to the same encryption algorithm. When the random number B is obtained as a result of decryption, the IC card authenticates the reader/writer (as a valid reader/writer).

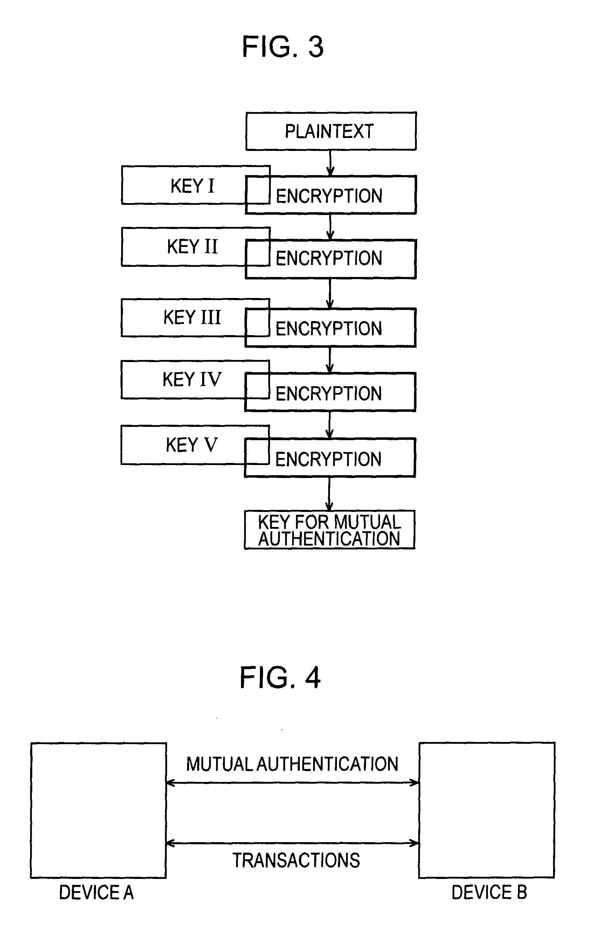

According to another method, to increase the reliability of mutual authentication, instead of keys (e.g., the keys 1 and 2) shared between the reader/writer and the IC card, keys, each of which is determined depending on the type of data to be accessed, are used to generate a key for mutual authentication. The mutual authentication key is generated as shown in Fig. 3.

For example, assuming that data blocks D1 to D5 are to be accessed by transactions, the reader/writer or the IC card encrypts plaintext, such as text data, shared between the reader/writer and the IC card using keys I to V related to the respective data blocks D1 to D5 to generate a cipher key for mutual authentication. In this case, the reader/writer and the IC card share a table in which each key is related to the corresponding data block to be accessed.

### SUMMARY OF THE INVENTION

In the related art, however, the encryption algorithm used for mutual authentication is restricted to a predetermined one. Disadvantageously, when a method for breaking codes according to the encryption algorithm is found, the reliability of mutual authentication is reduced.

The present invention is made in consideration of the above disadvantage. It is desirable to enable communication devices to authenticate each other with reliability.

According to an embodiment of the present invention, there is provided an information processing apparatus for communicating with another information processing apparatus by wire or wireless (contact-less). The apparatus includes the following elements:
- a random number generating section for generating a random number;
- a first authentication data generating section for generating, on the basis of the random number, first authentication data regarding the authentication of the other information processing apparatus;
- an authentication data transmitting section for transmitting the first authentication data to the other information processing apparatus;
- an authentication data receiving section for receiving second authentication data regarding the authentication of the other information processing apparatus, the second authentication data being generated on the basis of the first authentication data by the other information processing apparatus;
- a decrypting section for decrypting the second authentication data using at least one decryption method corresponding to at least one encryption method; and
- an authenticating section for verifying, on the basis of the decrypted second authentication data and the random number, whether the other information processing apparatus is a valid communications partner.

The information processing apparatus may further include an encryption method managing section storing at least one information unit regarding the at least one encryption method and supplying the information unit to the decrypting section.

Each information unit regarding the encryption method may include information that specifies an encryption algorithm and information regarding a key used to encrypt or decrypt data according to a decryption method corresponding to the encryption algorithm. The encryption method managing section may sequentially supply the information units regarding the plurality of different encryption methods to the decrypting section in a predetermined order.

The information units regarding the respective encryption methods may be shared with the other information processing apparatus. The second authentication data may be generated by encrypting the random number, serving as the first authentication data, according to the respective encryption methods through the other information processing apparatus.

The decrypting section may decrypt the second authentication data using the decryption methods corresponding to the respective encryption methods used by the other information processing apparatus. When the decrypted second authentication is identical to the random number, the authenticating section may authenticate the other information processing apparatus as a valid communications partner.

The encryption method managing section may further store information necessary to generate a key and generate the key on the basis of the information.

The information necessary to generate the key may include information units respectively regarding a plurality of different encryption methods which are related to respective types of data to be used. The encryption method managing section may encrypt plaintext, which is shared with the other information processing apparatus, according to at least one encryption method related to at least one type of data to be used to generate the key.

Each information unit regarding the encryption method may include information that specifies an encryption algorithm and information regarding a key used to encrypt data according to the encryption algorithm.

The information processing apparatus may further receive third authentication data which is generated on the basis of a random number generated in order to authenticate the apparatus through the other information processing apparatus, encrypt the random number, serving as the third authentication data, using the at least one encryption method to generate fourth authentication data, and transmit the fourth authentication data to the other information processing apparatus.

The information processing apparatus may be authenticated on the basis of the fourth authentication data by the other information processing apparatus.

According to another embodiment of the present invention, there is provided an information processing method for an information processing apparatus which communicates with another information processing apparatus by wire or wireless. The method includes the steps of generating a random number, generating first authentication data on the basis of the generated random number, the first authentication data regarding the authentication of the other information processing apparatus, transmitting the first authentication data to the other information processing apparatus, receiving second authentication data regarding the authentication of the other information processing apparatus, the second authentication data being generated on the basis of the first authentication data by the other information processing apparatus, decrypting the second authentication data using at least one decryption method corresponding to at least one encryption method, and verifying, on the basis of the decrypted second authentication data and the generated random number, whether the other information processing apparatus is a valid communications partner.

According to further another embodiment of the present invention, there is provided a program for an information processing apparatus which communicates with another information processing apparatus by wire or wireless (contact-less). The program allows a computer to execute the steps of controlling the generation of a random number, controlling the generation of first authentication data on the basis of the generated random number, the first authentication data regarding the authentication of the other information processing apparatus, controlling the transmission of the first authentication data to the other information processing apparatus, controlling the reception of second authentication data regarding the authentication of the other information processing apparatus, the second authentication data being generated on the basis of the first authentication data by the other information processing apparatus, controlling the decryption of the second authentication data using at least one decryption method corresponding to at least one encryption method, and controlling the verification of, on the basis of the decrypted second authentication data and the generated random number, whether the other information processing apparatus is a valid communications partner.

According to still another embodiment of the present invention, there is provided a recording medium in which a program for an information processing apparatus communicating with another information processing apparatus by wire or wireless (contact-less) is recorded. The program allows a computer to execute the steps of controlling the generation of a random number, controlling the generation of first authentication data on the basis of the generated random number, the first authentication data regarding the authentication of the other information processing apparatus, controlling the transmission of the first authentication data to the other information processing apparatus, controlling the reception of second authentication data regarding the authentication of the other information processing apparatus, the second authentication data being generated on the basis of the first authentication data by the other information processing apparatus, controlling the decryption of the second authentication data using at least one decryption method corresponding to at least one encryption method, and controlling the verification of, on the basis of the decrypted second authentication data and the generated random number, whether the other information processing apparatus is a valid communications partner.

In this specification, the term "information processing apparatus" means not only IC cards, but also other data storage/communication devices, such as for example, cellular phones or PDAs which has IC card function. These apparatus include at least one IC chip configured to function as an IC card. The term "other information processing apparatus" means not only Reader/Writer, but also other communication apparatus which has Reader/Writer function included in the apparatus such as cellular phones or PDAs.

According to the present invention, in the information processing apparatus and method and the program therefor, a random number is generated. First authentication data regarding the authentication of another information processing apparatus is generated on the basis of the generated random number. The first authentication data is transmitted to the other information processing apparatus. Second authentication data regarding the authentication of the other information processing apparatus is received, the second authentication data being generated on the basis of the first authentication data by the other information processing apparatus. The second authentication data is decrypted using at least one decryption method corresponding to at least one encryption method. Whether the other information processing apparatus is a valid communications partner is verified on the basis of the decrypted second authentication data and the generated random number.

According to the present invention, communication devices can authenticate each other with high reliability.

### BRIEF DESCRIPTION OF THE DRAWINGS

Fig. 1 is a diagram showing conventional mutual authentication;
Fig. 2 is a diagram illustrating the conventional mutual authentication;
Fig. 3 is a diagram showing an example of key generation in the conventional mutual authentication.
Fig. 4 is a diagram of an information processing system according to an embodiment of the present invention;
Fig. 5 is a block diagram of the internal structure of a device A;
Fig. 6 is a block diagram of the internal structure of a device B;
Fig. 7 is a block diagram of the functional structure of software executed by a CPU in Fig. 5;
Fig. 8 is a block diagram of the functional structure of software executed by a CPU in Fig. 6;
Fig. 9 is a flowchart explaining a process of mutual authentication between the devices A and B;
Fig. 10 is a flowchart explaining a process of generating authentication data 1;
Fig. 11 is a flowchart explaining a process of encrypting a random number RanA;
Fig. 12 is a diagram showing an example of information stored in each algorithm/key information management unit;
Fig. 13 is a flowchart explaining a process of generating authentication data 2;
Fig. 14 is a flowchart explaining a process of decrypting the authentication data 1;
Fig. 15 is a flowchart explaining a process of encrypting resultant data;
Fig. 16 is a flowchart explaining a process of generating authentication data 3;
Fig. 17 is a flowchart explaining a process of encrypting a random number RanB;
Fig. 18 is a flowchart explaining a process of authenticating the device B;
Fig. 19 is a flowchart explaining a process of decrypting the authentication data 2;
Fig. 20 is a flowchart explaining a process of generating authentication data 4;
Fig. 21 is a flowchart explaining a process of decrypting the authentication data 3;
Fig. 22 is a flowchart explaining a process of decrypting resultant data;
Fig. 23 is a flowchart explaining a process of authenticating the device A;
Fig. 24 is a flowchart explaining a process of decrypting the authentication data 4;
Fig. 25 is a diagram showing another example of information stored in each algorithm/key information management unit; and
Fig. 26 is a flowchart explaining a process of generating a cipher key.

### DESCRIPTION OF THE PREFERRED EMBODIMENTS

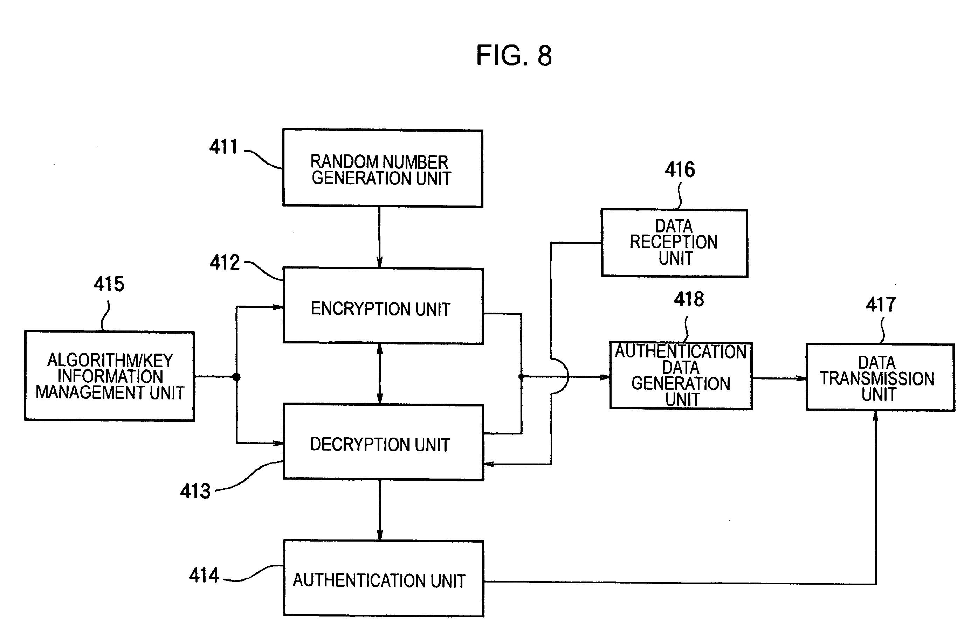

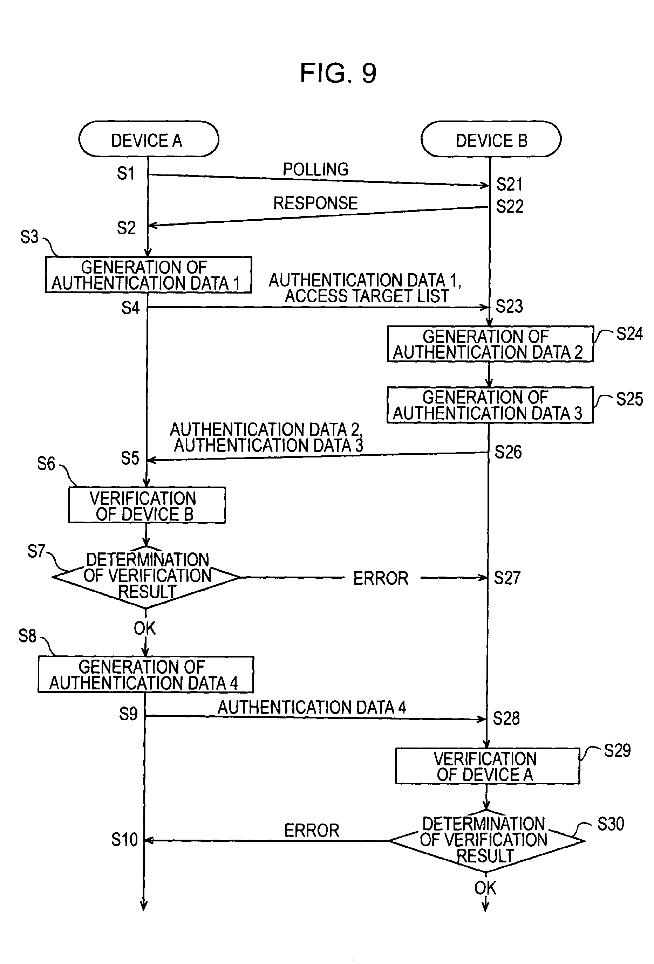

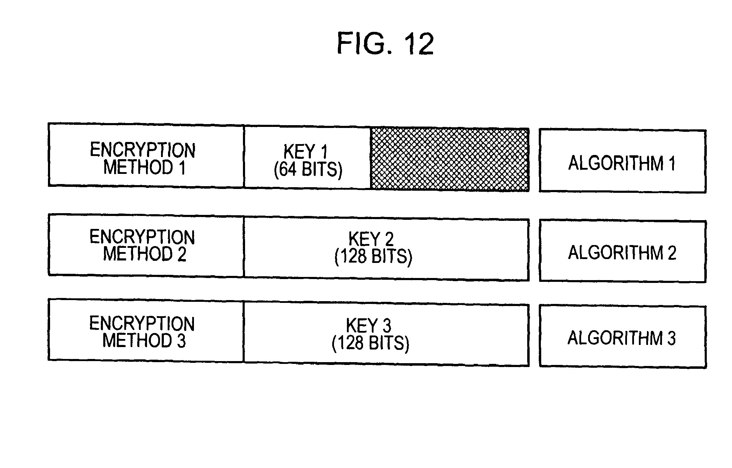

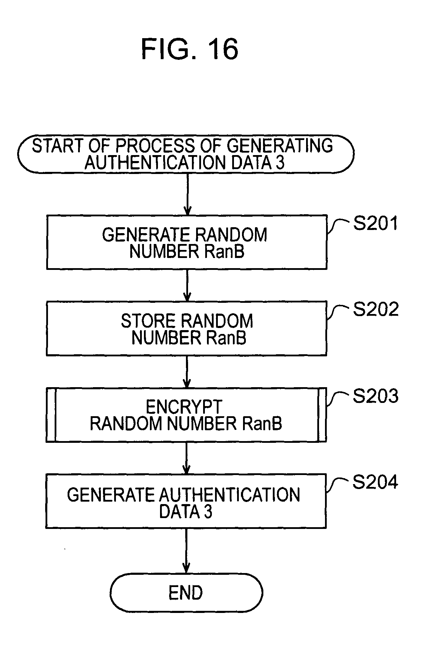

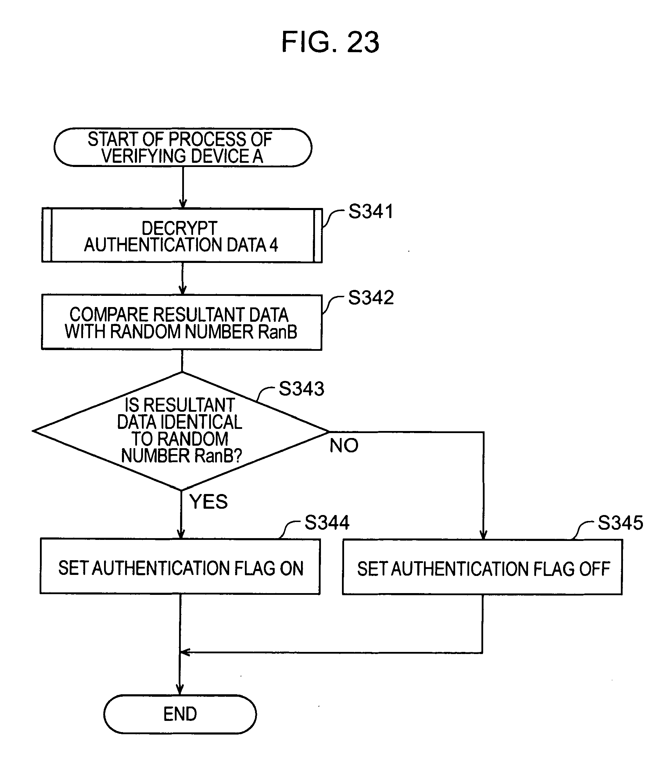

According to an embodiment of the present invention, there is provided an information processing apparatus (e.g., a device B of Fig. 4) for communicating with another information processing apparatus by wire or wireless (contact-less), the apparatus including: a random number generating section (e.g., a random number generation unit 411, shown in Fig. 8, for executing step S201 in Fig. 16) for generating a random number (e.g., a random number RanB); a first authentication data generating section (e.g., an authentication data generation unit 418, shown in Fig. 8, for executing step S204 in Fig. 16) for generating first authentication data (e.g., authentication data 3) regarding the authentication of the other information processing apparatus on the basis of the random number generated by the random number generating section; an authentication data transmitting section (e.g., a data transmission unit 417, shown in Fig. 8, for executing step S26 in Fig. 9) for transmitting the first authentication data to the other information processing apparatus; an authentication data receiving section (e.g., a data reception unit 416, shown in Fig. 8, for executing step S28 in Fig. 9) for receiving second authentication data (e.g., authentication data 4) regarding the authentication of the other information processing apparatus, the second authentication data being generated based on the first authentication data by the other information processing apparatus; a decrypting section (e.g., a decryption unit 413, shown in Fig. 8, for executing step S341 in Fig. 23) for decrypting the second authentication data using at least one decryption method corresponding to at least one encryption method (e.g., encryption methods 1 to 3 in Fig. 12); and an authenticating section (e.g., an authentication unit 414, shown in Fig. 8, for executing step S343 in Fig. 23) for verifying, on the basis of the second authentication data decrypted by the decrypting section and the random number generated by the random number generating section, whether the other information processing apparatus is a valid communications partner.

According to this embodiment of the present invention, the information processing apparatus may further include an encryption method managing section (e.g., an algorithm/key information management unit 415 in Fig. 8) for storing at least information regarding the at least one encryption method and supplying the information unit to the decrypting section.

In the information processing apparatus according to this embodiment of the present invention, each information unit regarding the encryption method includes information that specifies an encryption algorithm (e.g., each of algorithms 1 to 3 in Fig. 12) and information regarding a key (e.g., each of keys 1 to 3 in Fig. 12) used to encrypt or decrypt data according to a decryption method corresponding to the encryption algorithm. The encryption method managing section may sequentially supply the information units regarding the plurality of different encryption methods to the decrypting section in a predetermined order.

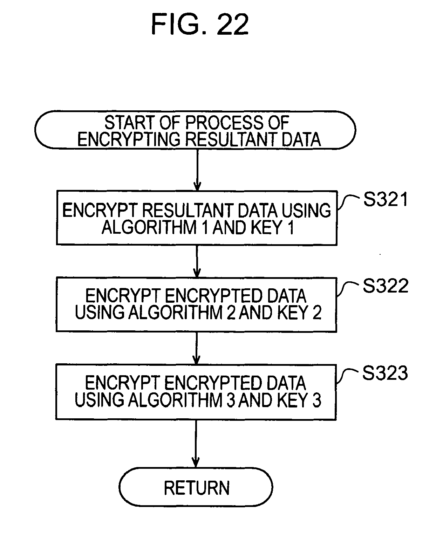

In the information processing apparatus according to this embodiment of the present invention, the information units regarding the respective encryption methods are shared with the other information processing apparatus. The second authentication data can be generated by encrypting the random number (e.g., the random number RanB), serving as the first authentication data, according to the respective encryption methods (in, e.g., steps S321 to S323 in Fig. 22) through the other information processing apparatus.

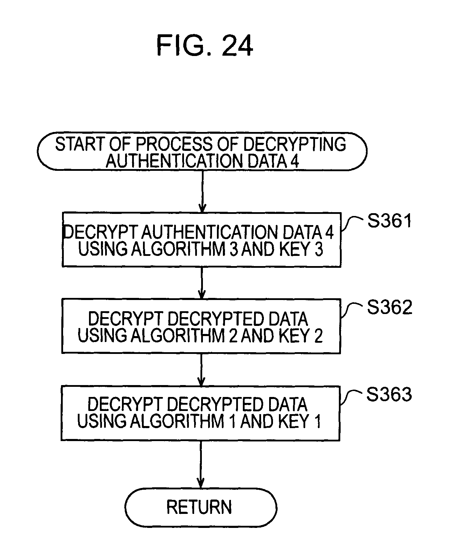

In the information processing apparatus according to this embodiment of the present invention, the decrypting section decrypts the second authentication data according to decryption methods corresponding to the respective encryption methods used by the other information processing apparatus (in, e.g., steps S361 to S363 in Fig. 24). When the second authentication data decrypted by the decrypting section is identical to the random number, the authenticating section can authenticate the other information processing apparatus as a valid communications partner.

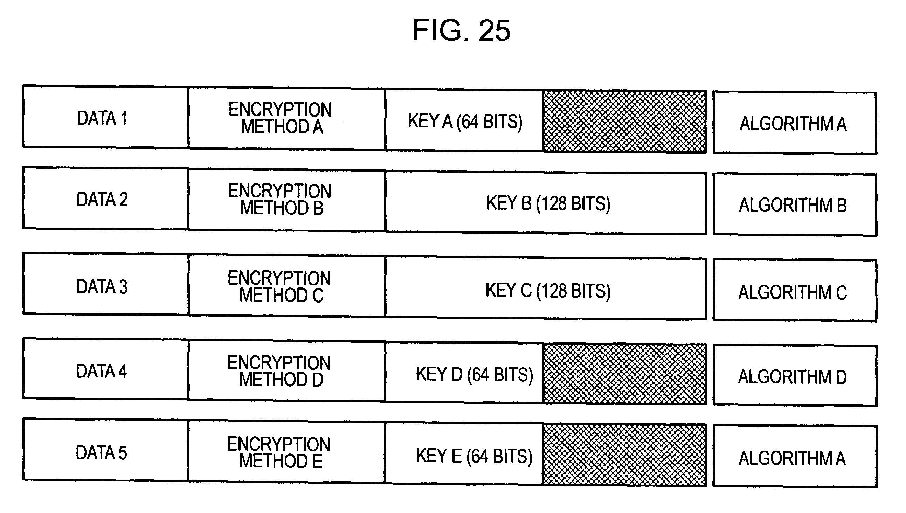

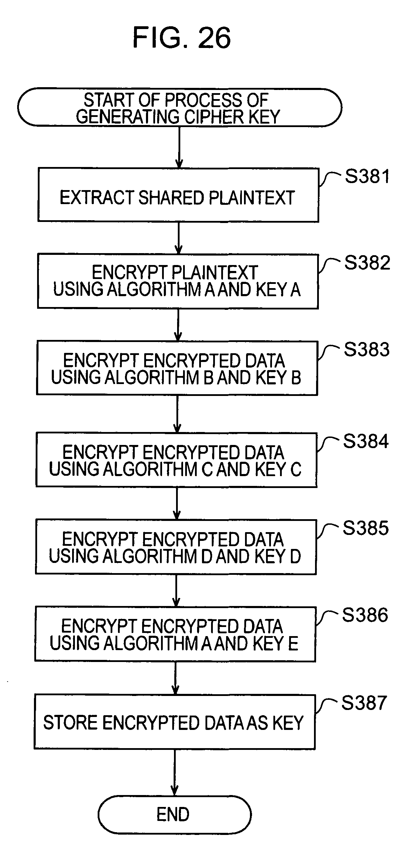

In the information processing apparatus according to this embodiment of the present invention, the encryption method managing section may further store information (e.g., information in Fig. 25) necessary to generate a key and generate the key on the basis of the information (according to, e.g., a process of Fig. 26).

In the information processing apparatus according to this embodiment of the present invention, the information necessary to generate the key includes information units regarding respective encryption methods (e.g., encryption methods A to E in Fig. 25) which are related to respective types of data to be used (e.g., data blocks 1 to 5 in Fig. 25). The encryption method managing section encrypts plaintext, which is shared with the other information processing apparatus, according to at least one encryption method corresponding to at least one type of data to be used (in, e.g., steps S381 to 387 in Fig. 26), thus generating the key.

In the information processing apparatus according to this embodiment of the present invention, each information unit regarding the encryption method may include information that specifies an encryption algorithm (e.g., each of algorithms A to D in Fig. 25) and information regarding a key (e.g., each of keys A to E in Fig. 25) used to encrypt data according to the encryption algorithm.

According to this embodiment of the present invention, the information processing apparatus may further receive third authentication data (e.g., authentication data 1) which is generated on the basis of a random number (e.g., a random number RanA) generated in order to authenticate the information processing apparatus (in, e.g., step S23 in Fig. 9). The information processing apparatus may encrypt the random number, serving as the third authentication data, using the at least one encryption method (e.g., the encryption methods 1 to 3 in Fig. 12) to generate fourth authentication data (e.g., authentication data 2) (in, e.g., step S24 in Fig. 9) and then transmit the fourth authentication data to the other information processing apparatus (in, e.g., step S26 in Fig. 9).

According to this embodiment of the present invention, the information processing apparatus can be authenticated on the basis of the fourth authentication data by the other information processing apparatus (in, e.g., step S6 in Fig. 9).

According to another embodiment of the present invention, there is provided an information processing method for an information processing apparatus (e.g., the device B in Fig. 4) for communicating with another information processing apparatus by wire or wireless (contact-less), the method including the steps of: generating a random number (e.g., the random number RanB) (e.g., step S201 in Fig. 16); generating first authentication data (e.g., the authentication data 3) regarding the authentication of the other information processing apparatus on the basis of the generated random number (e.g., step S204 in Fig. 16); transmitting the first authentication data to the other information processing apparatus (e.g., step S26 in Fig. 9); receiving second authentication data (e.g., the authentication data 4) regarding the authentication of the other information processing apparatus, the second authentication data being generated based on the first authentication data by the other information processing apparatus (e.g., step S28 in Fig. 9); decrypting the second authentication data using at least one decryption method corresponding at least one encryption method (e.g., the encryption methods 1 to 3 in Fig. 12) (e.g., step S341 in Fig. 23); and verifying, on the basis of the decrypted second authentication data and the generated random number, whether the other information processing apparatus is a valid communications partner (e.g., step S343 in Fig. 23).

According to further another embodiment of the present invention, there is provided a program for an information processing apparatus (e.g., the device B in Fig. 4) communicating with another information processing apparatus by wire or wireless (contact-less), the program allowing a computer to execute the steps of: controlling the generation of a random number (e.g., the random number RanB) (e.g., step S201 in Fig. 16); controlling the generation of first authentication data (e.g., the authentication data 3) regarding the authentication of the other information processing apparatus on the basis of the generated random number (e.g., step S204 in Fig. 16); controlling the transmission of the first authentication data to the other information processing apparatus (e.g., step S26 in Fig. 9); controlling the reception of second authentication data (e.g., the authentication data 4) regarding the authentication of the other information processing apparatus, the second authentication data being generated based on the first authentication data by the other information processing apparatus (e.g., step S28 in Fig. 9); controlling the decryption of the second authentication data using at least one decryption method corresponding at least one encryption method (e.g., the encryption methods 1 to 3 in Fig. 12) (e.g., step S341 in Fig. 23); and controlling the verification of, on the basis of the encrypted second authentication data and the generated random number, whether the other information processing apparatus is a valid communications partner (e.g., step S343 in Fig. 23).

According to still another embodiment of the present invention, there is provided a recording medium in which a program for an information processing apparatus (e.g., the device B in Fig. 4) is recorded, the information processing apparatus communicating with another information processing apparatus by wire or wireless (contact-less), the program allowing a computer to execute the steps of: controlling the generation of a random number (e.g., the random number RanB) (e.g., step S201 in Fig. 16); controlling the generation of first authentication data (e.g., the authentication data 3) regarding the authentication of the other information processing apparatus on the basis of the generated random number (e.g., step S204 in Fig. 16); controlling the transmission of the first authentication data to the other information processing apparatus (e.g., step S26 in Fig. 9); controlling the reception of second authentication data (e.g., the authentication data 4) regarding the authentication of the other information processing apparatus, the second authentication data being generated based on the first authentication data by the other information processing apparatus (e.g., step S28 in Fig. 9); controlling the decryption of the second authentication data using at least one decryption method corresponding at least one encryption method (e.g., the encryption methods 1 to 3 in Fig. 12) (e.g., step S341 in Fig. 23); and controlling the verification of, on the basis of the encrypted second authentication data and the generated random number, whether the other information processing apparatus is a valid communications partner (e.g., step S343 in Fig. 23).

Embodiments of the present invention will now be described below with reference to the drawings. Fig. 4 shows an information processing system according to an embodiment of the present invention. Referring to Fig. 4, a device A communicates with a device B to authenticate each other and, after that, perform transactions. The device A is intended to represent, e.g., a reader/writer for contactless IC cards. The device B is intended to represent, e.g., a contactless IC card. The device A communicates with the device B using respective antennas by radio.

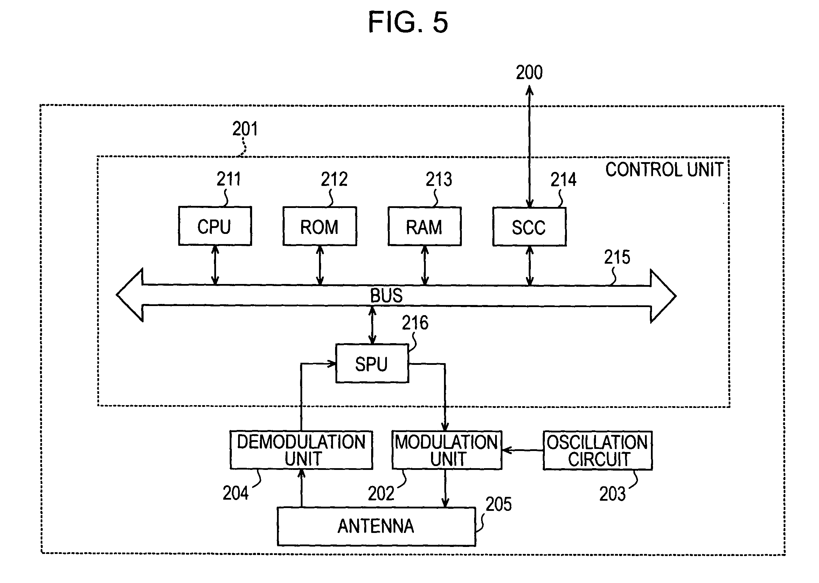

Fig. 5 is a block diagram of the internal structure of the device A (reader/writer).

A control unit 201 includes a CPU 211, a ROM 212, a RAM 213, a serial communication controller (SCC) 214, a signal processing unit (SPU) 216, and a bus 215 for connecting the above components.

The CPU 211 develops a control program stored in the ROM 212 into the RAM 213 and executes various processes on the basis of, e.g., response data transmitted from the contactless IC card (device B) and control signals supplied from an external processor. For example, the CPU 211 generates a command to be transmitted to the contactless IC card (device B) and outputs the command to the SPU 216 through the bus 215. In addition, the CPU 211 verifies data transmitted from the contactless IC card (device B).

The SCC 214 supplies data transmitted from an external processor, which is connected thereto through a bus 200, to the CPU 211 via the bus 215. In addition, the SCC 214 outputs data supplied from the CPU 211 through the bus 215 to the external processor connected through the bus 200.

When receiving response data transmitted from the contactless IC card (device B) through a demodulation unit 204, the SPU 216 performs, e.g., binary phase shift keying (BPSK) demodulation (Manchester code decoding) on the data and supplies the resultant data to the CPU 211. In addition, when a command to be transmitted to the contactless IC card (device B) is supplied to the SPU 216 through the bus 215, the SPU 216 performs BPSK modulation (Manchester code encoding) on the command and outputs the resultant data to a modulation unit 202.

The modulation unit 202 performs amplitude shift keying (ASK) modulation on carrier waves of a predetermined frequency supplied from an oscillation circuit (OSC) 203 on the basis of data supplied from the SPU 216 and outputs the modulated waves as electromagnetic waves through an antenna 205. On the other hand, the demodulation unit 204 demodulates modulated waves (ASK-modulated waves) captured through the antenna 205 and outputs the demodulated data to the SPU 216.

The antenna 205 emits predetermined electromagnetic waves and determines, on the basis of a change in load on the electromagnetic waves, whether the contactless IC card (device B) is brought near the device A. For example, when the contactless IC card (device B) is brought near the device B, the antenna 205 transmits and receives various data blocks to/from the contactless IC card (device B).

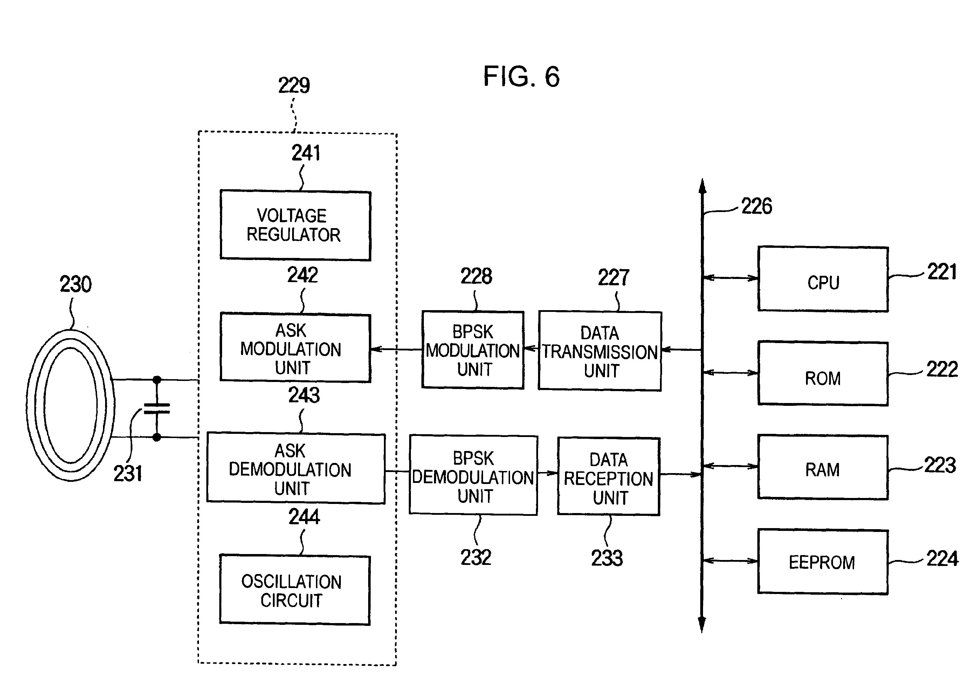

Fig. 6 is a block diagram of the internal structure of the device B (contactless IC card).

The contactless IC card (device B) includes an antenna (loop antenna) 230, a capacitor 231, and an IC having components other than the above components on one chip as shown in Fig. 6. The contactless IC card transmits and receives various data blocks to/from the reader/writer (device A) using electromagnetic induction in a half-duplex manner. The contactless IC card is not necessarily shaped into a card.

A CPU 221 develops a control program stored in a ROM 222 into a RAM 223 and controls the whole operation of the contactless IC card. For example, when the antenna 230 receives electromagnetic waves radiated from the reader/writer (device A), the CPU 221 transmits IC card information to the reader/writer in response to the electromagnetic waves, the IC card information including a card identification number set in the contactless IC card (device B). In addition, in response to a request from the reader/writer (device A), the CPU 221 supplies information necessary for transactions to the reader/writer.

An LC circuit including the antenna 230 and the capacitor 231 is resonated by electromagnetic waves of a predetermined frequency radiated from the reader/writer (device A) arranged near the contactless IC card. In an interface unit 229, an ASK (amplitude shift keying) demodulation unit 243 detects the envelope of modulated waves (ASK-modulated waves) received through the antenna 230 to demodulate data and outputs the data to a BPSK (binary phase shift keying) demodulation unit 232.

In the interface unit 229, the ASK demodulation unit 243 rectifies an alternating-current magnetic field excited by the antenna 230, a voltage regulator 241 controls voltage generated by the magnetic field at a constant level and supplies the constant voltage as DC power supply to respective components. As will be described below, electric power of the electromagnetic waves radiated from the reader/writer (device A) is controlled so as to generate the magnetic field to provide electric power necessary for the contactless IC card (device B).

In the interface unit 229, an oscillation circuit 244 has therein a phase locked loop (PLL) circuit to generate a clock signal having the same frequency as the clock frequency of a received signal.

In addition, when transmitting predetermined information to the reader/writer (device A), the interface unit 229 turns on or off, e.g., a predetermined switching element (not shown) in response to data supplied from a BPSK modulation unit 228. Only when the switching element is in the ON state, the interface unit 229 connects a predetermined load to the antenna 230 in parallel, thus varying the load on the antenna 230.

An ASK modulation unit 242 performs ASK modulation on BPSK-modulated waves supplied from the BPSK modulation unit 228 in accordance with a change in the load on the antenna 230 and transmits the modulated component to the reader/writer (device A) through the antenna 230.

When data demodulated by the ASK demodulation unit 243 is subjected to BPSK modulation, the BPSK demodulation unit 232 demodulates (i.e., performs Manchester code decoding to) the data on the basis of a clock signal supplied from a PLL circuit (not shown) and outputs the demodulated data to a data reception unit 233. The data reception unit 233 appropriately outputs the supplied data to the CPU 221. The CPU 221 allows the RAM 223 or an EEPROM 224 to store the data.

The CPU 221 reads out data stored in the EEPROM 224 and supplies the data to a data transmission unit 227. The BPSK modulation unit 228 performs BPSK modulation (i.e., Manchester code encoding) on the data supplied from the data transmission unit 227 and outputs the modulated data to the ASK modulation unit 242.

The EEPROM 224 appropriately stores information necessary for mutual authentication and information necessary for transactions.

The above description relates to the case where the device A is the reader/writer for contactless IC cards, the device B is the contactless IC card, and the device A communicates with the device B by radio. The present invention can also be applied to another case where the device A is a reader/writer for contact IC cards, the device B is a contact IC card, and the devices A and B communicate with each other by wire. In addition, the present invention can also be applied to still another case where the device A is an information processing apparatus, such as a personal computer, and the device B is an information processing apparatus, such as a personal digital assistant (PDA).

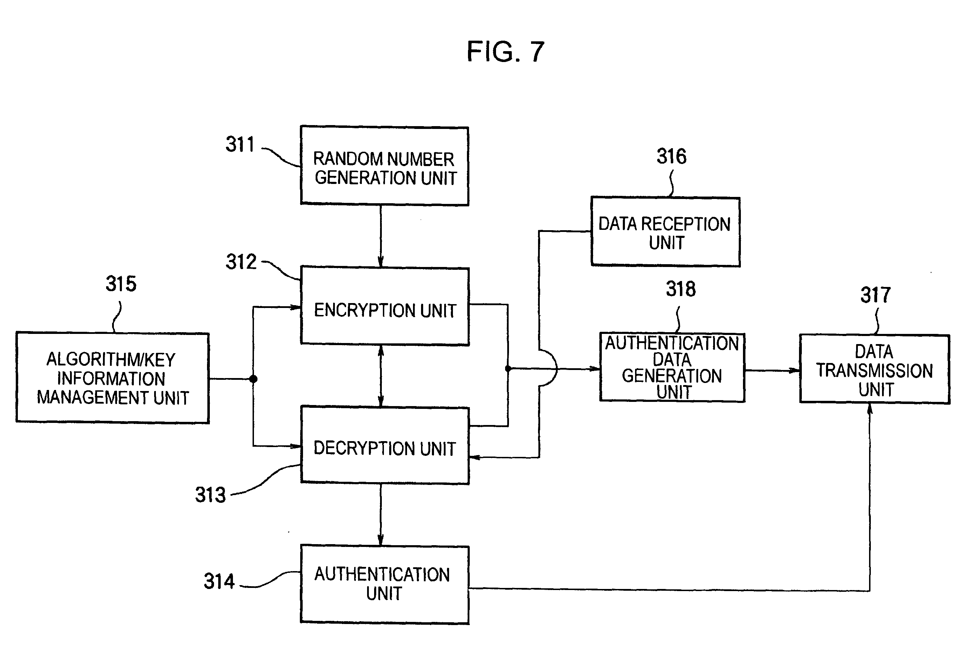

Fig. 7 is a block diagram of the functional structure of software executed by the CPU 211 in Fig. 5.

A random number generation unit 311 generates a random number necessary to perform mutual authentication with a communications partner (in this case, the device B), supplies the generated random number to an encryption unit 312, and allows a storage unit including the RAM 213 to store the random number.

The encryption unit 312 encrypts a random number generated by the random number generation unit 311 or data output from a decryption unit 313, which will be described below, using a predetermined encryption algorithm and a key corresponding to the encryption algorithm, which is specified on the basis of information supplied from an algorithm/key information management unit 315. The encryption unit 312 supports encryption algorithms, such as Data Encryption Standard (DES), Triple DES, and Advanced Encryption Standard (AES). For example, when receiving information that specifies DES and the corresponding key from the algorithm/key information management unit 315, the encryption unit 312 encrypts a random number or data using DES and the key.

The decryption unit 313 decrypts data received through a data reception unit 316 using a predetermined encryption algorithm and a key corresponding to the encryption algorithm, which is specified on the basis of information supplied from the algorithm/key information management unit 315. The decryption unit 313 supports encryption algorithms, such as DES, Triple DES, and AES. For example, when receiving information that specifies DES and the corresponding key from the algorithm/key information management unit 315, the decryption unit 313 decrypts data using DES and the key.

An authentication unit 314 compares data output from the decryption unit 313 with the random number stored in the storage unit, verifies a communications partner (the device B in this case) on the basis of the result of the comparison, and outputs the result of the verification to a data transmission unit 317.

The algorithm/key information management unit 315 stores information regarding at least one preset encryption algorithm, i.e., at least one information unit that specifies the encryption algorithm and at least one information unit regarding a key corresponding to the encryption algorithm such that the encryption algorithm is related to the corresponding key. The key is used to encrypt data (e.g., a random number) according to the corresponding encryption algorithm. As necessary, the algorithm/key information management unit 315 supplies the information units to the encryption unit 312 and the decryption unit 313. In addition, the algorithm/key information management unit 315 sequentially supplies the information units that specify the respective encryption algorithms and the respective corresponding keys to the encryption unit 312 or the decryption unit 313. Thus, the encryption unit 312 can sequentially encrypt data according to the different encryption algorithms in multi-steps. Alternatively, the decryption unit 313 can sequentially decrypt data using the different encryption algorithms in multi-steps.

An authentication data generation unit 318 generates authentication data, which will be described below, on the basis of data output from the encryption unit 312 or the decryption unit 313.

The data transmission unit 317 and the data reception unit 316 control transmission and reception of data to/from the communications partner (device B in this case).

Fig. 8 is a block diagram of the function structure of software executed by the CPU 221 in Fig. 6.

Referring to Fig. 8, units 411 to 418 are functional blocks corresponding to the random number generation unit 311 to the authentication data generation unit 318 in Fig. 7, respectively. The respective units have the same functions as those of the corresponding units in Fig. 7, respectively. Accordingly, a detailed description thereof is omitted. The algorithm/key information management unit 415 in Fig. 8 corresponds to the algorithm/key information management unit 315 in Fig. 7. The algorithm/key information management unit 415 stores information regarding at least one preset encryption algorithm, i.e., at least one information unit that specifies the encryption algorithm and at least one information unit regarding a key corresponding to the encryption algorithm such that the encryption algorithm is related to the key. The key is used to encrypt data (e.g., a random number) according to the corresponding encryption algorithm. The units 315 and 415 share the above-mentioned algorithm information and key information.

In other words, the algorithm/key information management units 315 and 415 share the information units that specify the plurality of different encryption algorithms and the information units regarding the corresponding keys, each of which is used to encrypt data according to the corresponding encryption algorithm so that the device B correctly decrypts data, which is encrypted and is transmitted from the device A, and the device A correctly decrypts data, which is encrypted and is transmitted from the device B. The algorithm/key information management unit 415 supplies the information units that specify the respective encryption algorithms and the information units regarding the respective corresponding keys to the encryption unit 412 or the decryption unit 413 as necessary.

In a manner similar to the algorithm/key information management unit 315, the algorithm/key information management unit 415 sequentially supplies the information units that specify the respective encryption algorithms and the keys to the encryption unit 412 or the decryption unit 413. Thus, the encryption unit 412 can encrypt data according to the different encryption algorithms in multi-steps. Alternatively, the decryption unit 413 can decrypt data using the different encryption algorithms in multi-steps.

A mutual authentication process performed between the devices A and B will now be described with reference to a flowchart of Fig. 9. When the antenna 205 of the device A, serving as a reader/writer for contactless IC cards, radiates predetermined electromagnetic waves and detects the approach of the device B, serving as a contactless IC card, on the basis of a change in load on the electromagnetic waves, the process is executed prior to the execution of transactions.

In step S1, the device A transmits a polling signal to the device B. In step S21, the device B receives the polling signal. In step S22, the device B transmits a response to the polling signal received in step S21 to the device A. In step S2, the device A receives the response. Thus, the mutual authentication process between the devices A and B starts.

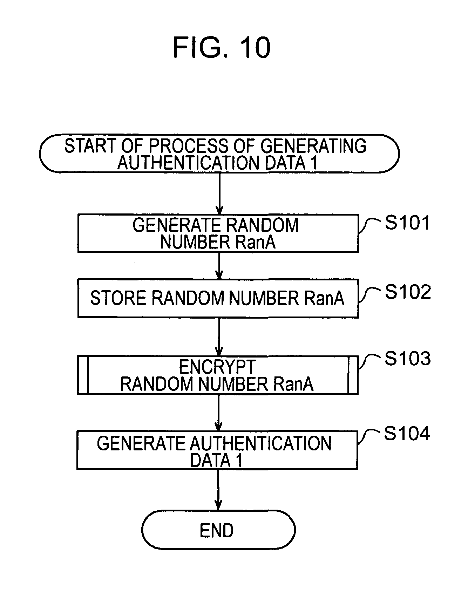

In step S3, the device A generates authentication data 1 as will be described below with reference to Fig. 10. The authentication data 1 is used to authenticate the device B through the device A and is generated by encrypting a random number. In step S4, the device A transmits the authentication data 1 generated in step S3 and an access target list, serving as information to specify data to be used between the devices A and B, to the device B. In step S23, the device B receives the data and the information. Instead of the authentication data 1, the random number can be transmitted without being encrypted.

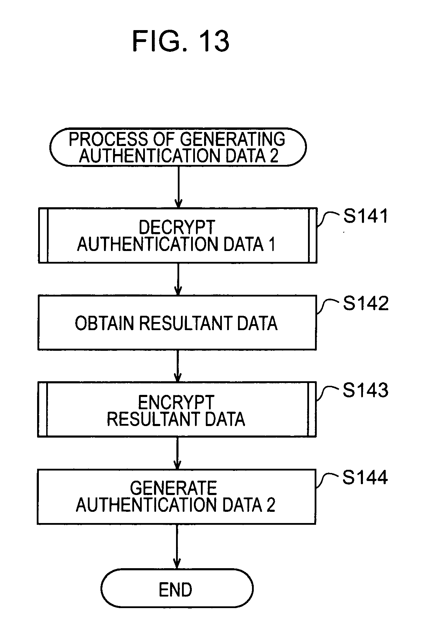

In step S24, as will be described below with reference to Fig. 13, the device B generates authentication data 2 on the basis of the authentication data 1 received in step S23. In other words, the authentication data 1 received in step S23 is decrypted and the decrypted authentication data 1 is encrypted by the device B, thereby generating authentication data 2. When the random number is transmitted without being encrypted instead of the authentication data 1, it is unnecessary to decrypt the authentication data 1.

In step S25, as will be described below with reference to Fig. 16, the device B generates authentication data 3. The authentication data 2 is used to authenticate the device A through the device B and is generated by encrypting a random number. In step S26, the device B transmits the authentication data 2 generated in step S24 and the authentication data 3 generated in step S25 to the device A. In step S5, the device A receives the data blocks, i.e., the authentication data 2 and the authentication data 3. Instead of the authentication data 3, the random number may be transmitted without being encrypted.

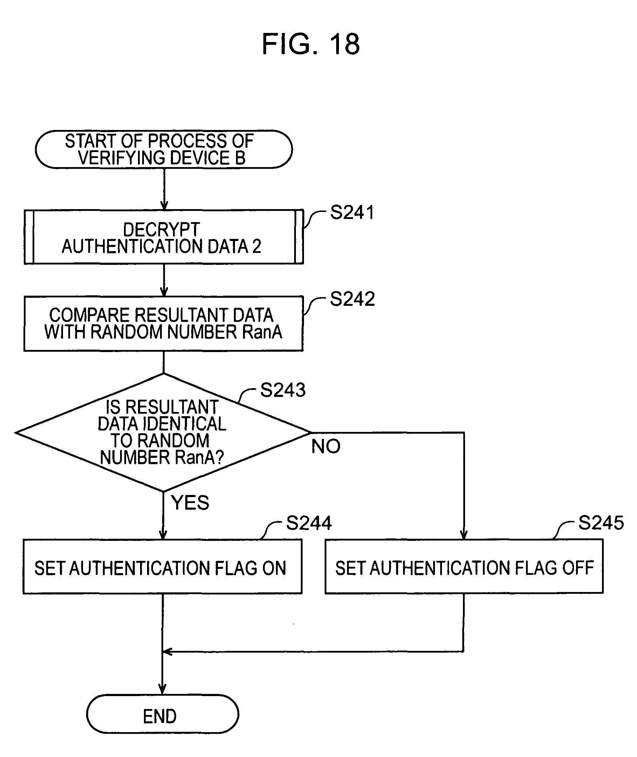

In step S6, as will be described below with reference to Fig. 18, the device A verifies whether the device B is authenticated on the basis of the authentication data 2 of the data blocks received in step S5. After the device A verifies whether the device B is authenticated (i.e., whether the device B is a valid communications partner), the device A outputs the result of the verification.

In step S7, the device A determines the verification result obtained in step S6. In step S7, when the device A determines the device B as a valid partner, the process proceeds to step S8.

On the other hand, in step S7, if the device A determines the device B as an invalid partner, the device A transmits an error signal to the device B. In step S27, the device B receives the error signal. In this case, the mutual authentication between the devices A and B is failed. The process terminates.

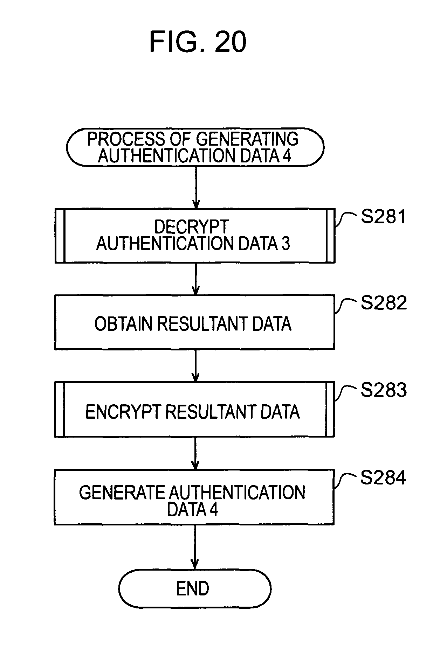

In step S8, as will be described below with reference to Fig. 20, the device A generates authentication data 4 on the basis of the authentication data 3 of the data blocks received in step S5. In other words, the authentication data 3 received in step S5 is decrypted and the decrypted authentication data 3 is encrypted by the device A, thereby generating authentication data 4. When the random number is transmitted without being encrypted instead of the authentication data 3, it is unnecessary to decrypt the authentication data 3. In step S9, the device A transmits the authentication data 4 generated in step S8 to the device B. In step S28, the device B receives the authentication data 4.

In step S29, as will be described below with reference to Fig. 23, the device B verifies whether the device A is authenticated. After the device B verifies whether the device A is authenticated (i.e., whether the device A is a valid communications partner), the device B outputs the result of the verification.

In step S30, the device B determines the verification result obtained in step S29. When the device B determines the device A as a valid partner, the mutual authentication between the devices A and B is achieved. After that, e.g., transactions are performed between the devices A and B.

On the other hand, in step S30, when the device B determines that the device A is invalid, the device B transmits an error signal to the device A. In step S10, the device A receives the error signal. In this case, the mutual authentication between the devices A and B is failed. The process terminates.

The process of generating the authentication data 1 in step S3 in Fig. 9 will now be described in detail with reference to a flowchart of Fig. 10.

In step S101, in the device A, the random number generation unit 311 generates a random number (hereinafter, referred to as a random number RanA) to authenticate the device B. In step S102, the storage unit including the RAM 213 stores the random number RanA generated in step S101.

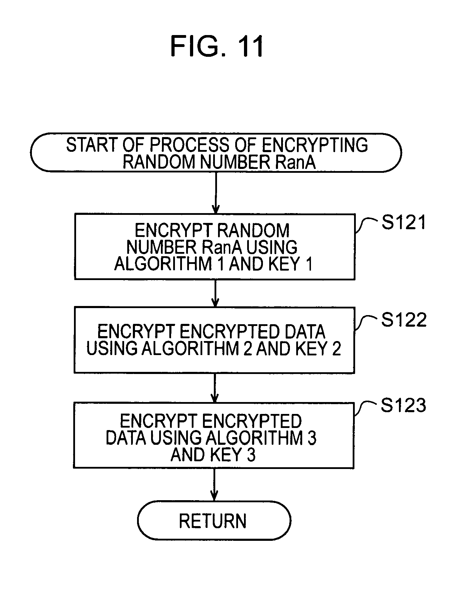

In step S103, as will be described below with reference to Fig. 11, the encryption unit 312 encrypts the random number RanA. In step S104, authentication data 1 is generated on the basis of the encrypted random number RanA (e.g., by adding predetermined control information to the encrypted random number RanA).

The authentication data 1 can also be generated by adding predetermined control information to the random number RanA, which is not encrypted. In this case, step S103 is skipped.

The process of encrypting the random number RanA in step S103 in Fig. 10 will now be described in detail with reference to a flowchart of Fig. 11.

According to the process, the encryption unit 312 encrypts the random number RanA. As mentioned above, the encryption unit 312 executes the encrypting process on the basis of the information regarding at least one preset encryption algorithm, i.e., the at least one information unit that specifies the encryption algorithm and the at least one information unit regarding a key used to encrypt data (e.g., a random number) according to the encryption algorithm, the algorithm information unit and the key information unit being supplied from the algorithm/key information management unit 315.

Fig. 12 shows an example of information units that specify respective encryption algorithms stored in the algorithm/key information management unit 315 and information units respectively regarding keys, each of which is used to encrypt (or decrypt) data (e.g., a random number) according to the corresponding encryption algorithm. The information units in Fig. 12 are shared by the devices A and B as mentioned above and are also stored in the algorithm/key information management unit 415.

Referring to Fig. 12, an encryption method 1 includes a key 1 with a 64-bit data length and an algorithm 1. In this case, the algorithm 1 serves as information that specifies a first encryption algorithm (e.g., DES) of a plurality of preset encryption algorithms and the key 1 is used to encrypt data according to this encryption algorithm.

Similarly, an encryption method 2 includes a key 2 with a 128-bit data length and an algorithm 2. In this case, the algorithm 2 serves as information that specifies a second encryption algorithm (e.g., AES) of the preset encryption algorithms and the key 2 is used to encrypt data according to this encryption algorithm.

Further, an encryption method 3 includes a key 3 with a 128-bit data length and an algorithm 3. In this case, the algorithm 3 serves as information that specifies a third encryption algorithm (e.g., Triple DES) of the preset encryption algorithms and the key 3 is used to encrypt data according to this encryption algorithm.

It is assumed that the encryption algorithms corresponding to the respective algorithms 1 to 3 are encryption algorithms of respective secret key (common key) cryptography systems, and each of the keys 1 to 3 is used to encrypt data and is also used to decrypt data, encrypted by the corresponding encryption algorithm, according to a decryption method corresponding to the encryption algorithm.

In the device A, the algorithm/key information management unit 315 sequentially supplies the information units regarding the respective encryption methods 1 to 3 to the encryption unit 312 in that order and the encryption unit 312 encrypts data according to the encryption methods.

In other words, in step S121 in Fig. 11, the encryption unit 312 encrypts the random number RanA using the encryption algorithm corresponding to the algorithm 1 and the key 1.

Subsequently, in step S122, the encryption unit 312 encrypts the data encrypted in step S121 using the encryption algorithm corresponding to the algorithm 2 and the key 2.

Further, in step S123, the encryption unit 312 encrypts the data encrypted in step S122 using the encryption algorithm corresponding to the algorithm 3 and the key 3.

In this manner, the authentication data 1 is generated based on the random number RanA.

The process of generating the authentication data 2 in step S24 will now be described in detail with reference to a flowchart of Fig. 13.

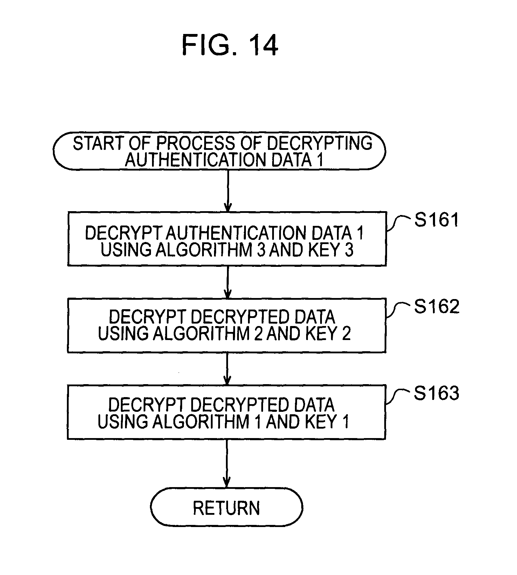

In step S141, as will be described below with reference to Fig. 14, the decryption unit 413 of the device B decrypts the authentication data 1. The decrypted authentication data 1 (i.e., the random number RanA) is obtained as resultant data in step S142. If the random number RanA has not been encrypted and been transmitted as the authentication data 1, the decryption in step S141 is not needed.

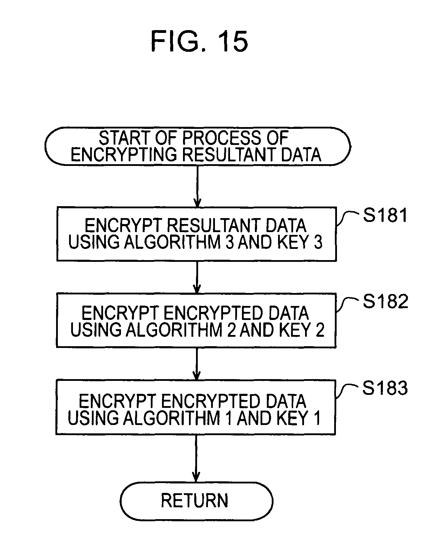

In step S143, as will be described below with reference to Fig. 15, the encryption unit 412 encrypts the resultant data, so that the resultant data (i.e., the random number RanA) obtained in step S142 is again encrypted in the device B. In step S144, authentication data 2 is generated on the basis of the encrypted data (e.g., by adding predetermined control information to the encrypted data).

The process of decrypting the authentication data 1 in step S141 in Fig. 13 will now be described in detail with reference to a flowchart of Fig. 14.

According to the process, the decryption unit 413 decrypts the authentication data 1. As mentioned above, the decryption unit 413 executes the decrypting process on the basis of the information regarding at least one preset encryption algorithm, i.e., the at least one information unit that specifies the encryption algorithm and the at least one information unit regarding a key used to encrypt (or decrypt) data (e.g., a random number) according to the encryption algorithm, the algorithm information unit and the key information unit being supplied from the algorithm/key information management unit 415.

In the device B, the algorithm/key information management unit 415 sequentially supplies the information units regarding the encryption methods 1 to 3, mentioned above with reference to Fig. 12, to the decryption unit 413 in this order of the encryption methods 3 to 1 and the decryption unit 413 decrypts data according to the encryption methods.

In other words, in step S161 in Fig. 14, the decryption unit 413 decrypts the authentication data 1 using (a decryption algorithm corresponding to) the encryption algorithm corresponding to the algorithm 3 and the key 3.

Subsequently, in step S162, the decryption unit 413 decrypts the data decrypted in step S161 using (a decryption algorithm corresponding to) the encryption algorithm corresponding to the algorithm 2 and the key 2.

Further, in step S163, the decryption unit 413 decrypts the data decrypted in step S162 using (a decryption algorithm corresponding to) the encryption algorithm corresponding to the algorithm 1 and the key 1.

As mentioned above with reference to Fig. 11, the authentication data 1 is generated by sequentially encrypting the random number RanA using the combination of the algorithm 1 and the key 1, that of the algorithm 2 and the key 2, and that of the algorithm 3 and the key 3 in that order. Therefore, the authentication data 1 is sequentially decrypted using the combination of the algorithm 3 and the key 3, that of the algorithm 2 and the key 2, and that of the algorithm 1 and the key 1 in that order, thus obtaining the random number RanA. In other words, the algorithm/key information management units 315 and 415 properly supply the information units that specify the respective preset encryption algorithms and the information units respectively regarding the keys, each of which is used to encrypt data according to the corresponding encryption algorithm, to the encryption unit 312 and the decryption unit 413, respectively. Thus, the random number RanA generated in the device A is acquired by the device B.

The process of encrypting the resultant data in step S143 in Fig. 13 will now be described in detail with reference to a flowchart of Fig. 15.

In step S181, the encryption unit 412 encrypts the resultant data (i.e., the random number RanA) obtained in step S142 in Fig. 13 using the encryption algorithm corresponding to the algorithm 3 and the key 3.

In step S182, the encryption unit 412 encrypts the data encrypted in step S181 using the encryption algorithm corresponding to the algorithm 2 and the key 2.

In step S183, the encryption unit 412 further encrypts the data encrypted in step S182 using the encryption algorithm corresponding to the algorithm 1 and the key 1.

In this manner, the resultant data (i.e., the random number RanA) is again encrypted and the authentication data 2 is generated based on the encrypted data.

The process of generating the authentication data 3 in step S25 in Fig. 9 will now be described in detail with reference to a flowchart of Fig. 16.

In step 201, in the device B, the random number generation unit 411 generates a random number (hereinafter, referred to as a random number RanB) to authenticate the device A. In step S202, the storage unit including the RAM 223 stores the random number RanB generated in step S201.

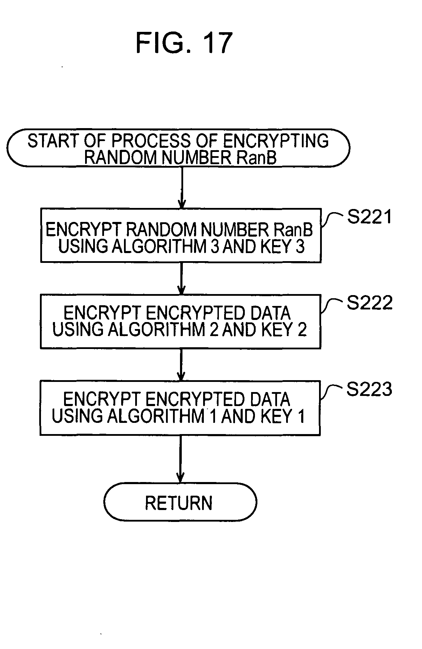

In step S203, as will be described below with reference to Fig. 17, the encryption unit 412 encrypts the random number RanB. In step S204, authentication data 3 is generated on the basis of the encrypted random number RanB (e.g., by adding predetermined control information to the encrypted random number RanB).

The authentication data 3 can also be generated by adding predetermined control information to the random number RanB, which is not encrypted. In this case, step S203 is skipped.

The process of encrypting the random number RanB in step S203 in Fig. 16 will now be described in detail with reference to a flowchart of Fig. 17.

According to the process, the encryption unit 412 encrypts the random number RanB. As mentioned above, the encryption unit 412 executes the encrypting process on the basis of the information regarding at least one preset encryption algorithm, i.e., the at least one information unit that specifies the encryption algorithm and the at least one information unit regarding a key used to encrypt data according to the encryption algorithm, the algorithm information unit and the key information unit being supplied from the algorithm/key information management unit 415.

In the device B, the algorithm/key information management unit 415 sequentially supplies the information units concerning the respective encryption methods 1 to 3, mentioned above with reference to Fig. 12, to the encryption unit 412 in this order of the encryption methods 3 to 1 and the encryption unit 412 sequentially encrypts data according to the encryption methods.

In other words, in step S221, the encryption unit 412 encrypts the random number RanB using the encryption algorithm corresponding to the algorithm 3 and the key 3.

Subsequently, in step S222, the encryption unit 412 encrypts the data encrypted in step S221 using the encryption algorithm corresponding to the algorithm 2 and the key 2.

In step S223, the encryption unit 312 further encrypts the data encrypted in step S222 using the encryption algorithm corresponding to the algorithm 1 and the key 1.

In this manner, the authentication data 3 is generated based on the random number RanB.

The process of verifying the device B in step S6 in Fig. 9 will now be described in detail with reference to a flowchart of Fig. 18.

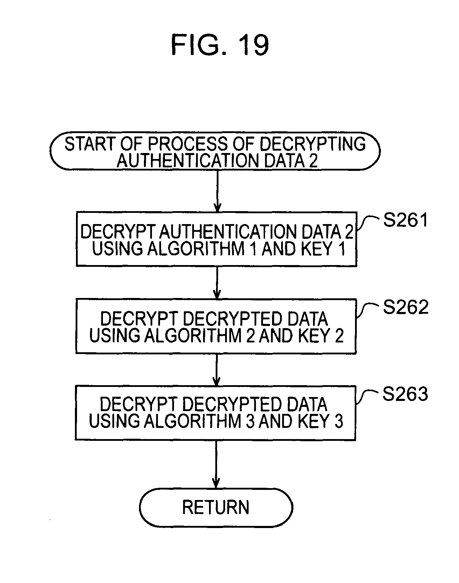

In step S241, as will be described below with reference to Fig. 19, the decryption unit 313 decrypts the authentication data 2. The decrypted authentication data 2 (i.e., the random number RanA) is obtained as resultant data by the authentication unit 314.

The process of decrypting the authentication data 2 in step S241 in Fig. 18 will now be described in detail with reference to a flowchart of Fig. 19.

According to the process, the decryption unit 313 decrypts the authentication data 2. As mentioned above, the decryption unit 313 executes the decrypting process on the basis of on the basis of the information regarding at least one preset encryption algorithm, i.e., the at least one information unit that specifies the encryption algorithm and the at least one information unit regarding a key used to encrypt (or decrypt) data according to the encryption algorithm, the algorithm information unit and the key information unit being supplied from the algorithm/key information management unit 315.

In the device A, the algorithm/key information management unit 315 sequentially supplies the information units regarding the respective encryption methods 1 to 3, mentioned above with reference to Fig. 12, to the decryption unit 313 in that order and the decryption unit 313 sequentially decrypts data according to the encryption methods.

In other words, in step S261 in Fig. 19, the decryption unit 313 decrypts the authentication data 2 using (the decryption algorithm corresponding to) the encryption algorithm corresponding to the algorithm 1 and the key 1.

Subsequently, in step S262, the decryption unit 313 decrypts the data decrypted in step S261 using (the decryption algorithm corresponding to) the encryption algorithm corresponding to the algorithm 2 and the key 2.

In step S263, the decryption unit 313 further decrypts the data decrypted in step S262 using (the decryption algorithm corresponding to) the encryption algorithm corresponding to the algorithm 3 and the key 3.

As mentioned above with reference to Fig. 15, the authentication data 2 is generated by sequentially encrypting the authentication data 1 (i.e., the random number RanA), which is decrypted by the device B, using the combination of the algorithm 3 and the key 3, that of the algorithm 2 and the key 2, and that of the algorithm 1 and the key 1 in that order. Therefore, the authentication data 2 is sequentially decrypted using the combination of the algorithm 1 and the key 1, that of the algorithm 2 and the key 2, and that of the algorithm 3 and the key 3 in that order, thus obtaining the random number RanA. In other words, the algorithm/key information management units 315 and 415 properly supply the information units that specify the respective preset encryption algorithms and the information units regarding the respective keys, each of which is used to encrypt data according to the corresponding encryption algorithm, to the decryption unit 313 and the encryption unit 412, respectively. Thus, the random number RanA encrypted in the device B is decrypted and is obtained by the device A.

Again referring to Fig. 18, in step S242, the authentication unit 314 compares the resultant data (i.e., the authentication data 2 decrypted in step S241) with the random number RanA stored in the storage unit in step S102 in Fig. 10.

The random number RanA stored in the storage unit in step S102 in Fig. 10 has been generated in order to authenticate the device B through the device A. Devices other than the device A cannot acquire the random number RanA in advance.

The resultant data has been obtained from a communications partner (the device B in this case). Unless the communications partner knows the decryption methods in the device A (i.e., a fact that the information units regarding the respective encryption methods 1 to 3, mentioned above with reference to Fig. 12, are sequentially supplied to the decryption unit 313 in that order and data is sequentially decrypted), the communications partner cannot assume data to be decrypted and encrypt the data.

If the decrypted authentication data 2 in step S241 is identical to the random number RanA stored in the storage unit in step S102 in Fig. 10, the communications partner may probably include the algorithm/key information management unit 415 corresponding to the algorithm/key information management unit 315 of the device A.

Assuming that a third party which does not include the algorithm/key information management unit 415 impersonates the device B, the third party has ascertained that the authentication data 2 was sequentially decrypted by the device A using the algorithms 1, 2, and 3 in that order. In addition, the third party has broken the keys 1 to 3 and generated the authentication data 2. The possibility of achieving the above-mentioned code breaking is virtually zero.

Therefore, if the resultant data (i.e., the decrypted authentication data 2 in step S241) is identical to the random number RanA stored in the storage unit in step S102 in Fig. 10 as the result of the comparison in step S242, the device B is authenticated as a valid communications partner.

In step S243, the authentication unit 314 determines whether the value of the resultant data is identical to the value of the random number as the result of the comparison in step S242.

In step S243, if the values are identical to each other, the process proceeds to step S244. The authentication unit 314 sets an authentication flag indicating that the device B is authenticated to the ON state.

On the other hand, if it is determined in step S243 that the values are not identical to each other, the process proceeds to step S245. The authentication unit 314 sets the above-mentioned authentication flag to the OFF state.

As mentioned above, the device B is verified. When the authentication flag is set to the ON state, it is determined in step S7 in Fig. 9 that the device B is authenticated. Then, the process proceeds to step S8. If the authentication flag is set to the OFF state, it is determined in step S7 in Fig. 9 that the device B is not authenticated. The device A transmits an error signal to the device B.

The process of generating the authentication data 4 in step S8 in Fig. 9 will now be described in detail with reference to a flowchart of Fig. 20.

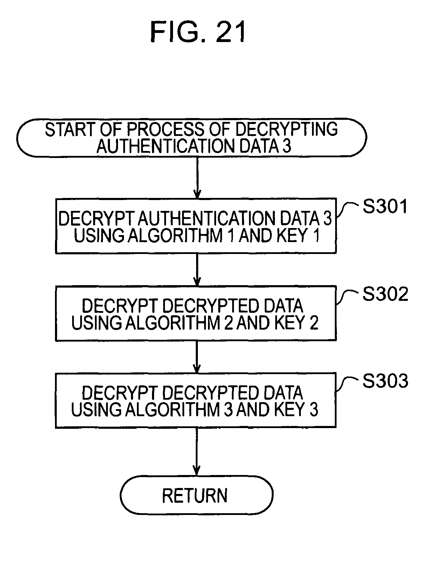

In step S281, as will be described below with reference to Fig. 21, the decryption unit 313 of the device A decrypts the authentication data 3. The decrypted authentication data 3 (i.e., the random number RanB) is obtained as resultant data in step S282. If the random number RanB has not been encrypted and been transmitted as authentication data 3, the decryption in step S281 is not needed.

In step S283, as will be described below with reference to Fig. 15, the encryption unit 312 encrypts the resultant data. In other words, the resultant data (i.e., the random number RanB) obtained in step S282 is again encrypted by the device A. In step S284, the authentication data 4 is generated on the basis of the encrypted data (e.g., by adding predetermined control information to the encrypted data).

The process of decrypting the authentication data 3 in step S281 in Fig. 20 will now be described in detail with reference to a flowchart of Fig. 21. As mentioned above, in the device A, the algorithm/key information management unit 315 sequentially supplies the information units regarding the respective encryption methods 1 to 3, mentioned above with reference to Fig. 12, to the decryption unit 313 in that order and the decryption unit 313 sequentially decrypts data according to the encryption methods.

In other words, in step S301 in Fig. 21, the decryption unit 313 decrypts the authentication data 3 using (the decryption algorithm corresponding to) the encryption algorithm corresponding to the algorithm 1 and the key 1.

Subsequently, in step S302, the decryption unit 313 decrypts the data decrypted in step S301 using (the decryption algorithm corresponding to) the encryption algorithm corresponding to the algorithm 2 and the key 2.

Further, in step S303, the decryption unit 313 decrypts the data decrypted in step S302 using (the decryption algorithm corresponding to) the encryption algorithm corresponding to the algorithm 3 and the key 3.

As mentioned above with reference to Fig. 17, the authentication data 3 is generated by sequentially encrypting the random number RanB using the combination of the algorithm 3 and the key 3, that of the algorithm 2 and the key 2, and that of the algorithm 1 and the key 1 in that order. Therefore, the authentication data 3 is sequentially decrypted using the combination of the algorithm 1 and the key 1, that of the algorithm 2 and the key 2, and that of the algorithm 3 and the key 3 in that order, thus obtaining the random number RanB. In other words, the algorithm/key information management units 315 and 415 properly supply the information units that specify the respective preset encryption algorithms and the information units regarding the respective keys, each of which is used to encrypt data according to the corresponding encryption algorithm, to the decryption unit 313 and the encryption unit 412, respectively. Thus, the random number RanB generated in the device B is acquired by the device A.

The process of encrypting the resultant data in step S283 in Fig. 20 will now be described in detail with reference to a flowchart of Fig. 22.

In step S321, the encryption unit 312 encrypts the resultant data (i.e., the random number RanB) obtained in step S282 in Fig. 20 using the encryption algorithm corresponding to the algorithm 1 and the key 1.

In step S322, the encryption unit 312 encrypts the data encrypted in step S321 using the encryption algorithm corresponding to the algorithm 2 and the key 2.

In step S323, the encryption unit 312 further encrypts the data encrypted in step S322 using the encryption algorithm corresponding to the algorithm 3 and the key 3.

In this manner, the resultant data (i.e., the random number RanB) is again encrypted and the authentication data 4 is generated based on the encrypted data.

The process of verifying the device A in step S29 in Fig. 9 will now be described in detail with reference to a flowchart of Fig. 23.

In step S341, as will be described below with reference to Fig. 24, the decryption unit 413 decrypts the authentication data 4. The decrypted authentication data 4 (i.e., the random number RanB) is obtained as resultant data by the authentication unit 414.

The process of decrypting the authentication data 4 in step S341 in Fig. 23 will now be described in detail with reference to a flowchart of Fig. 24. As mentioned above, in the device B, the algorithm/key information management unit 415 sequentially supplies the information units regarding the respective encryption methods 1 to 3, mentioned above with reference to Fig. 12, to the decryption unit 413 in the order of the encryption methods 3 to 1 and the decryption unit 413 sequentially decrypts data according to the encryption methods.

In other words, in step S361 in Fig. 24, the decryption unit 413 decrypts the authentication data 4 using (the decryption algorithm corresponding to) the encryption algorithm corresponding to the algorithm 3 and the key 3.

Subsequently, in step S362, the decryption unit 413 decrypts data decrypted in step S361 using (the decryption algorithm corresponding to) the encryption algorithm corresponding to the algorithm 2 and the key 2.

In step S363, the decryption unit 413 further decrypts data decrypted in step S362 using (the decryption algorithm corresponding to) the encryption algorithm corresponding to the algorithm 1 and the key 1.

As mentioned above with reference to Fig. 22, the authentication data 4 is generated by sequentially encrypting the authentication data 3 (i.e., the random number RanB), which has been decrypted by the device A, using the combination of the algorithm 1 and the key 1, that of the algorithm 2 and the key 2, and that of the algorithm 3 and the key 3 in that order. Therefore, the authentication data 4 is sequentially decrypted using the combination of the algorithm 3 and the key 3, that of the algorithm 2 and the key 2, and that of the algorithm 1 and the key 1 in that order, thus obtaining the random number RanB. In other words, the algorithm/key information management units 315 and 415 properly supply the information units that specify the respective preset encryption algorithms and the information units regarding the respective keys, each of which is used to encrypt data according to the corresponding encryption algorithm, to the encryption unit 312 and the decryption unit 413, respectively. Thus, the random number RanB encrypted in the device A is decrypted and is obtained by the device B.

Again referring to Fig. 23, in step S342, the authentication unit 414 compares the resultant data (i.e., the decrypted authentication data 4 in step S341) with the random number RanB stored in the storage unit in step S202 in Fig. 16.

The random number RanB stored in the storage unit in step S202 in Fig. 16 has been generated in order to authenticate the device A through the device B. Devices other than the device B cannot acquire the random number RanB in advance.

The resultant data has been obtained from a communications partner (the device A in this case). Unless the communications partner knows the decryption methods in the device B (i.e., a fact that the information units regarding the respective encryption methods 1 to 3, mentioned above with reference to Fig. 12, are sequentially supplied to the decryption unit 413 in that order and data is sequentially decrypted), the communications partner cannot assume data to be decrypted and encrypt the data.

If the decrypted authentication data 4 in step S341 is identical to the random number RanB stored in the storage unit in step S202 in Fig. 16, the communications partner may probably include the algorithm/key information management unit 315 corresponding to the algorithm/key information management unit 415 of the device B.

Assuming that a third party which does not include the algorithm/key information management unit 315 impersonates the device A, the third party has ascertained that the authentication data 4 was sequentially decrypted by the device B using the algorithms 3, 2, and 1 in that order. In addition, the third party has broken the keys 3 to 1 and generated the authentication data 4. The possibility of achieving the above-mentioned code breaking is virtually zero.

Therefore, if the resultant data (i.e., the authentication data 4 decrypted in step S341) is identical to the random number RanB stored in the storage unit in step S202 in Fig. 16 as the result of the comparison in step S342, the device A is authenticated as a valid communications partner.

In step S343, the authentication unit 414 determines verifies whether the value of the resultant data is identical to the value of the random number as the result of the comparison in step S342.

In step S343, if it is determined that the values are identical to each other, the process proceeds to step S344. The authentication unit 414 sets an authentication flag indicating that the device A is authenticated to the ON state.

On the other hand, if it is determined in step S343 that the values are not identical to each other, the process proceeds to step S345. The authentication unit 414 sets the above-mentioned authentication flag to the OFF state.

As mentioned above, the device B verifies the device A. When the authentication flag is set to the ON state, it is determined in step S30 in Fig. 9 that the device A is authenticated. Then, transactions are executed. If the authentication flag is set to the OFF state, it is determined in step S30 in Fig. 9 that the device A is not authenticated. The device B transmits an error signal to the device A.

As mentioned above, the mutual authentication between the devices A and B is performed. The authentication data blocks 1 to 4 for mutual authentication are encrypted or decrypted using different encryption algorithms and different keys in the devices A and B, thus preventing fraud, such as impersonation. Consequently, the reliability of mutual authentication can be increased.

The above embodiment relates to the case where the encryption algorithms corresponding to the encryption methods 1 to 3 and the corresponding keys described with reference to Fig. 12 are used to generate the authentication data blocks 1 to 4. The number of combinations each including an encryption algorithm and a key is not limited to that in the above embodiment.

According to the above embodiment, in the device A, the algorithm/key information management unit 315 sequentially supplies the information units regarding the respective encryption methods 1 to 3 mentioned above with reference to Fig. 12 to the encryption unit 312 or the decryption unit 313 in that order. In the device B, the algorithm/key information management unit 415 sequentially supplies the information units regarding the respective encryption methods 1 to 3 to the encryption unit 412 or the decryption unit 413 in the order of the encryption methods 3 to 1. For example, in the device A, the algorithm/key information management unit 315 may sequentially supply the information units regarding the respective encryption methods 1 to 3 to the encryption unit 312 or the decryption unit 313 in the order of the encryption method 2, the encryption method 1, and the encryption method 3. Accordingly, in the device B, the algorithm/key information management unit 415 may sequentially supply the information units regarding the respective encryption methods 1 to 3 to the encryption unit 412 or the decryption unit 413 in the order of the encryption method 3, the encryption method 1, and the encryption method 2.

In addition, in generating the authentication data blocks 1 to 4, it is unnecessary to use all of the encryption methods 1 to 3. For example, encryption methods corresponding to the respective authentication data blocks can be predetermined between the devices A and B such that the encryption method 1 is used to encrypt or decrypt the authentication data 1, the encryption method 2 is used to encrypt or decrypt the authentication data 2, and so forth.

The above embodiment relates to the case where the predetermined keys (e.g., the keys 1 to 3 in Fig. 12) are used for mutual authentication. A key can be generated and be used every time mutual authentication is performed.

In the above case, each of the algorithm/key information management units 315 and 415 stores information shown in, e.g., Fig. 25 in addition to the information units mentioned above with reference to Fig. 12.

Fig. 25 shows another example of information units that specify respective encryption algorithms stored in the algorithm/key information management units 315 and 415 and information units regarding respective keys, each of which is used to encrypt data according to the corresponding encryption algorithm. Referring to Fig. 25, a data block 1 is related to an encryption method A including a key A with a 64-bit data length and an algorithm A. A data block 2 is related to an encryption method B including a key B with a 128-bit data length and an algorithm B.

Similarly, data blocks 3 to 5 are related to encryption methods C to E, respectively.

The data blocks 1 to 5 are stored in, e.g., the EEPROM 224 of the device B and are used for transactions. Which of the data blocks 1 to 5 is used between the devices A and B is specified depending on the type of a reader/writer (device A) and the kind of transaction which a user designates. Information that specifies data to be used is transmitted between the devices A and B in advance on the basis of the above-mentioned access target list transmitted in step S4 in Fig. 9.

For example, when the device A notifies the device B of the data blocks 1 to 5 to be used, the algorithm/key information management unit 415 generates a cipher key used for mutual authentication as shown in, e.g., Fig. 26.

Fig. 26 is a flowchart of a process of generating a cipher key through the algorithm/key information management unit 415.

In step S381, the algorithm/key information management unit 415 extracts plaintext, such as text data, which is shared between the devices A and B. Then, the algorithm/key information management unit 415 sequentially supplies the information units regarding the respective encryption methods A to E, mentioned above with reference to Fig. 25, to the encryption unit 412 in, e.g., the order of the encryption methods A to E.

In other words, in step S382, the encryption unit 412 encrypts the plaintext extracted in step S381 using an encryption algorithm corresponding to the algorithm A and the key A.

Subsequently, in step S383, the encryption unit 412 encrypts the data encrypted in step S382 using an encryption algorithm corresponding to the algorithm B and the key B.

In step S384, the encryption unit 412 further encrypts the data encrypted in step S383 using an encryption algorithm corresponding to the algorithm C and the key C.

In step S385, the encryption unit 412 encrypts the data encrypted in step S384 using an encryption algorithm corresponding to the algorithm D and the key D.

In step S386, the encryption unit 412 encrypts the data encrypted in step S385 using the encryption algorithm corresponding to the algorithm A and the key E.

In step S387, the algorithm/key information management unit 415 stores the resultant data in step S386 as a key used for mutual authentication (e.g., the key 1 in Fig. 12).

For example, when the device A notifies the device B of the data blocks 1 to 3 as data to be used, steps S385 and S386 are omitted. When a plurality of keys are needed, different plaintexts shared between the devices A and B are extracted in step S381. The respective plaintexts may be encrypted in the subsequent steps. Since the plaintext is encrypted in multi-steps, i.e., in steps S382 to S386, it is difficult for a third party to break the encrypted plaintext. In order to secure concealment of data, therefore, it is unnecessary to give consideration to selecting long text data. Plaintext shared between the devices A and B can be properly selected and be extracted.

In the device A, the algorithm/key information management unit 315 and the encryption unit 312 execute steps similar to the above-mentioned steps in Fig. 26 to generate a key for mutual authentication. A detailed description thereof is omitted.

As mentioned above, the key used for mutual authentication is generated. In this manner, a key for mutual authentication is changed (in this case, depending on data to be used) every time mutual authentication is performed, thus achieving stronger security. Consequently, the reliability of mutual authentication can be further increased. In addition, since a key used for mutual authentication is generated by encrypting plaintext using a plurality of encryption algorithms and keys in multi-steps, the security can be stronger than conventional key generation methods.

In mutual authentication between the devices A and B, another mutual authentication method is available: A public key encryption algorithm is installed on an encrypting or decrypting function of each of the respective devices, the device A encrypts a random number using a secret key of the device A, the device B decrypts the encrypted data using a public key of the device A to obtain the random number, the device B encrypts the random number using a secret key of the device B and transmits the encrypted data, and the device A decrypts the data using the secret key thereof to obtain the random number, so that the devices A and B authenticate each other. However, executing encryption or decryption according to the public key system increases a load on arithmetic processing by, e.g., the CPU. Concerning a device, such as an IC card, which is very small and needs power saving performance, it is difficult to construct the device so that encryption or decryption according to the public key system can be performed for a short time. According to the present invention, a secret key encryption algorithm with a relatively small load on arithmetic processing is used. Accordingly, even in the device, such as an IC card, which is very small and needs power saving performance, mutual authentication can be performed for a short time with high reliability.

The above-mentioned series of processes can be executed by hardware or software. When the series of processes is executed by software, a program constituting the software is installed on the device through a network, such as the Internet, or a recording medium including a removable medium via the bus 200.

The recording medium includes a removable disk, such as a magnetic disk (including a floppy disk), an optical disk (including a compact disk-read only memory (CD-ROM) and a digital versatile disk (DVD)), a magneto-optical disk (including a MiniDisc (MD)), or a semiconductor memory, in which the program has been recorded and which is distributed in order to provide the program to a user. The recording medium also includes a read-only memory, such as the ROM 212 or 222, in which the program has been recorded and which is incorporated in an apparatus and is then delivered to the user.

In this specification, steps executing the above-mentioned series of processes may be performed in time series in the described order, or may be performed in parallel or individually.

It should be understood by those skilled in the art that various modifications, combinations, sub-combinations and alterations may occur depending on design requirements and other factors insofar as they are within the scope of the appended claims or the equivalents thereof.

## Claims

1. An information processing apparatus (B) for communicating with another information processing apparatus (A) by wire or wireless, the apparatus comprising:
- random number generating means (411) for generating a random number (RanB);
- first authentication data generating means (418) for generating, on the basis of said random number (RanB), first authentication data regarding the authentication of said other information processing apparatus (A);
- authentication data transmitting means (417) for transmitting said first authentication data to said other information processing apparatus (A);
- authentication data receiving means (416) for receiving second authentication data regarding the authentication of said other information processing apparatus, said second authentication data being generated on the basis of said first authentication data by said other information processing apparatus (A);
- decrypting means for decrypting said second authentication data using at least one decryption method corresponding to at least one encryption method; and
- authenticating means (414) for verifying, on the basis of said decrypted second authentication data and said random number, whether said other information processing apparatus (A) is a valid communications partner.

2. The apparatus according to Claim 1, further comprising:
encryption method managing means (415) for storing at least one information unit regarding said at least one encryption method and supplying the information unit to said decrypting means (413).

3. The apparatus according to Claim 2, wherein
said information unit includes information that specifies an encryption algorithm and information regarding a key used to encrypt or decrypt data according to a decryption method corresponding to said encryption algorithm, and wherein
said encryption method managing means sequentially supplies the information units regarding the plurality of different encryption methods to said decrypting means (413) in a predetermined order.

4. The apparatus according to Claim 3, wherein
the information units regarding the respective encryption methods are shared with said other information processing apparatus, and
the second authentication data is generated by encrypting said random number (RanB), serving as said first authentication data, according to the respective encryption methods (S321, S322, S323) through the other information processing apparatus.

5. The apparatus according to Claim 4, wherein
the decrypting means decrypts said second authentication data using the decryption methods (S361, S362, S363) corresponding to the respective encryption methods used by the other information processing apparatus, and
when said decrypted second authentication data is identical to said random number (Ran B), the authenticating means authenticates the other information processing apparatus as a valid communications partner.

6. The apparatus according to Claim 2, wherein the encryption method managing means further stores information necessary to generate a key and generates the key on the basis of the information.

7. The apparatus according to Claim 6, wherein
the information necessary to generate the key includes information units respectively regarding a plurality of different encryption methods which are related to respective types of data to be used, and
the encryption method managing means encrypts plaintext, which is shared with the other information processing apparatus, according to at least one encryption method related to at least one type of data to be used to generate the key.

8. The apparatus according to Claim 7, wherein each information unit regarding the encryption method includes information that specifies an encryption algorithm and information regarding a key used to encrypt data according to the encryption algorithm.

9. The apparatus according to Claim 1, wherein,
third authentication data is further received, the third authentication data being generated on the basis of a random number (RanA) which is generated in order to authenticate the apparatus through the other information processing apparatus,
the random number, serving as the third authentication data, is encrypted using the at least one encryption method to generate fourth authentication data, and
the fourth authentication data is transmitted to the other information processing apparatus.

10. The apparatus according to Claim 9, wherein the apparatus is authenticated on the basis of the fourth authentication data by the other information processing apparatus.

11. An information processing method for an information processing apparatus which communicates with another information processing apparatus by wire or wireless, the method comprising the steps of:
- generating (S201) a random number (RanB);
- generating (S204) on the basis of said random number (RanB), first authentication data regarding the authentication of said other information processing apparatus;
- transmitting (S26) said first authentication data to said other information processing apparatus (A);
- receiving (S28) second authentication data regarding the authentication of the other information processing apparatus, said second authentication data being generated on the basis of said first authentication data by said other information processing apparatus (A);
- decrypting (S341) said second authentication data using at least one decryption method corresponding to at least one encryption method; and
- verifying (S343), on the basis of said decrypted second authentication data and said generated random number (RanB), whether said other information processing apparatus (A) is a valid communications partner.

12. A program for an information processing apparatus (B) which communicates with another information processing apparatus by wire or wireless, the program allowing a computer to execute the steps of:
- controlling the generation (S201) of a random number (RanB);
- controlling the generation (S204), on the basis of said generated random number (Ran B), of first authentication data regarding the authentication of said other information processing apparatus;
- controlling the transmission (S26) of said first authentication data to said other information processing apparatus;
- controlling the reception (S28) of second authentication data regarding the authentication of said other information processing apparatus, said second authentication data being generated on the basis of said first authentication data by said other information processing apparatus;
- controlling the decryption (S341) of said second authentication data using at least one decryption method corresponding to at least one encryption method; and
- controlling the verification of (S343), on the basis of said decrypted second authentication data and said generated random number, whether said other information processing apparatus is a valid communications partner.

13. A recording medium in which a program for an information processing apparatus (B) communicating with another information processing apparatus by wire or wireless is recorded, the program allowing a computer to execute the steps of:
controlling (S201) the generation of a random number (RanB);
controlling (S204) the generation, on the basis of said generated random number (RanB), first authentication data regarding the authentication of said other information processing apparatus;
- controlling the transmission (S26) of said first authentication data to said other information processing apparatus;
- controlling the reception (S28) of second authentication data regarding the authentication of said other information processing apparatus, said second authentication data being generated on the basis of said first authentication data by said other information processing apparatus;
- controlling the decryption (S341) of said second authentication data using at least one decryption method corresponding to at least one encryption method; and
- controlling the verification of, on the basis of said decrypted second authentication data and said random number, whether said other information processing apparatus is a valid communications partner.
